# FASCICULE DE BREVET EUROPEEN

(11) **EP 4 359 231 B1**
(45) Date de publication et mention de la délivrance du brevet: **15.10.2025**
(21) Numéro de dépôt: 22735214.3
(22) Date de dépôt: 13.06.2022
(51) Int. Cl.: B60C 13/02, B60C 13/00

(54) **PNEUMATIQUE DE VÉLO OPTIMISÉ POUR ASSISTANCE ÉLECTRIQUE**
FÜR ELEKTRISCHE UNTERSTÜTZUNG OPTIMIERTER FAHRRADREIFEN
BICYCLE TYRE OPTIMISED FOR ELECTRIC ASSISTANCE

(30) Priorité: 21.06.2021 FR 2106557
(43) Date de publication de la demande: 01.05.2024
(73) Titulaire: COMPAGNIE GENERALE DES ETABLISSEMENTS MICHELIN, 63000 Clermont-Ferrand (FR)
(72) Inventeur: POTIN, Yves, 63040 CLERMONT-FERRAND CEDEX 9 (FR); HENNEBERT, Guillaume, 63040 CLERMONT-FERRAND CEDEX 9 (FR)
(74) Mandataire: M.F.P. Michelin
(86) Numéro de dépôt international: PCT/FR2022/051116
(87) Numéro de publication internationale: WO 2022/269160

(56) Documents cités:
- EP-B1- 3 016 846
- DE-A1- 102010 060 808
- FR-A3- 3 088 189
- US-A- 5 078 227
- US-A1- 2016 236 520

## Description

La présente invention a pour objet un pneumatique de vélo optimisé pour l'assistance électrique, destiné à plus particulièrement à équiper tout moyen de transport léger utilisant principalement des pneumatiques de vélo et ayant un moteur et donc une assistance électrique tel qu'un vélo, un tricycle ou un fauteuil électrique. La présente invention inclut également le système adapté à l'utilisation dudit pneumatique.

Il existe une multitude de système d'entrainement de roue pour des vélos à assistance électriques ou pour fauteuil roulant (DE102010060808, US2016236520, US5078227, EP3016846, FR3088189). La roue peut être entrainée par un galet dont la surface de roulement est pour partie en caoutchouc par contact avec la partie métallique de la roue mais ce système perd beaucoup de son efficacité par temps de pluie, le métal mouillé étant particulièrement glissant. Il n'est pas possible d'entrainer la roue par un contact avec ce type de galet sur le flanc du pneumatique car la température de contact devient rapidement trop élevée et le pneumatique ou le galet se détériorent rapidement. Par ailleurs en condition humide, le contact de deux surfaces caoutchouteuses est peu adhérent.

De nombreux systèmes utilisent des galets avec un contact sur la bande de roulement mais cela contribue grandement à diminuer la durée de vie du pneumatique d'autant que la bande de roulement du pneumatique est conçue pour offrir une bonne adhérence par tout temps sur des chemins ou des routes goudronnées en disposant de motifs de sculpture mais pas pour passer du couple via un galet plus ou moins agressif.

Les galets d'entraînement métalliques moletés sont particulièrement intéressants pour leur longévité mais l'usure qu'ils provoquent par rainurage est particulièrement rapide.

Un autre système intéressant consiste à disposer sur le flanc du pneumatique une gomme crantée et de l'entraîner via un galet cranté, les crans s'engrenant les uns dans les autres amenant peu de frottements donc d'usure ou d'échauffement WO2015049263 A1. Ce système offre un très bon passage de couple même par temps de pluie et préserve d'une usure trop rapide la bande de roulement. Cependant il demande que le galet et le pneumatique soient positionnés précisément, ce qui nécessite l'intervention de personnes professionnelles pas toujours facilement disponibles.

Les inventeurs se sont donnés pour objectif d'améliorer le dispositif en améliorant chacune des parties en commençant par le pneumatique pour une bonne transmission du couple même avec de l'humidité sans nécessiter une position très précise du galet vis-à-vis du pneumatique et sans dégrader la pérennité dans le temps des pièces du dispositif que ce soit le galet d'entrainement ou le pneumatique.

Cet objectif a été atteint, selon l'invention, par un pneumatique destiné à équiper un vélo ou un fauteuil roulant à assistance électrique comprenant :
- une armature de sommet, radialement intérieure à une bande de roulement, ladite bande de roulement étant réunie par l'intermédiaire de deux flancs, à deux bourrelets,
- le pneumatique comprenant sur au moins un des flancs et en saillie du flanc, une bande d'un mélange caoutchouteux d'épaisseur axiale, perpendiculaire au flanc, au moins égale à 1 mm et au plus égale à 4 mm, et de hauteur radiale, perpendiculaire à l'axe de révolution du pneumatique, au moins égale à 10 mm et au plus égale à 30 mm,
- ledit mélange caoutchouteux de la bande ayant une dureté Shore A comprise entre 55 et 75, et une température de transition vitreuse comprise entre -15°C et -0°C,
- ledit mélange caoutchouteux de la bande formant une surface extérieure lisse destinée à entrer en contact avec un galet d'entrainement porteur d'une pluralité d'indenteurs.

De façon générale un pneumatique comprend une bande de roulement, destinée à venir en contact avec un sol par l'intermédiaire d'une surface de roulement, dont les deux extrémités axiales sont reliées par l'intermédiaire de deux flancs à deux bourrelets assurant la liaison mécanique entre le pneumatique et la jante sur laquelle il est destiné à être monté. Le flanc d'un pneumatique de vélo comprend depuis l'intérieur du pneumatique vers l'extérieur : une gomme intérieure, une couche de carcasse comprenant des renforts textiles et une gomme flanc dont le rôle est de protéger la couche de carcasse des agressions mécaniques et de la lumière ultraviolet, l'épaisseur totale du flanc d'un pneumatique de vélo dépasse rarement 2 mm.

Le pneumatique selon l'invention comprend en outre et de préférence sur un seul flanc, une bande d'un mélange caoutchouteux. Cette bande est disposée de manière à pouvoir entrer en contact avec un galet d'entrainement métallique muni d'indenteurs afin de mettre en mouvement la roue de vélo, à savoir l'axe du galet appartenant à un plan contenant l'axe de rotation du pneumatique. Un tel galet pour transmettre les efforts aura une hauteur axiale totale comprise entre 10 et 30 mm, correspondant respectivement à la hauteur minimale nécessaire pour passer le couple voulu et à la hauteur radiale maximale disponible sur un pneumatique de vélo pour y coller une bande d'un mélange caoutchouteux.

L'expression « mélange caoutchouteux » ou caoutchouc désigne une composition de caoutchouc comportant au moins un élastomère et une charge.

Pour éviter tout dommage de la gomme flanc, l'épaisseur de la bande de mélange caoutchouteux est comprise entre 1 et 4 mm.

Pour ne pas perturber le contact avec les indenteurs du galet d'entrainement, la surface extérieure de la bande de mélange caoutchouteux, destinée à entrer en contact avec eux, est lisse. C'est-à-dire qu'elle est dépourvue de reliefs et de marquages supérieurs à 0.5 mm. Elle peut présenter une rugosité allant jusqu'à 500 micromètres.

Le mélange caoutchouteux en contact en rotation avec le galet d'entrainement doit être déformable pour éviter que les indenteurs ne s'émoussent et pour que la transmission des efforts moteur soit possible. Le mélange caoutchouteux constituant la bande de contact avec l'indenteur, a une dureté Shore A comprise entre 55 et 75, et dont une température de transition vitreuse comprise entre -15°C et 0°C.

Une caractéristique physique usuelle d'un mélange élastomérique est sa température de transition vitreuse Tg, température à laquelle le mélange élastomérique passe d'un état caoutchouteux déformable à un état vitreux rigide. La température de transition vitreuse Tg d'un mélange élastomérique est généralement déterminée lors de la mesure des propriétés dynamiques du mélange élastomérique, sur un viscoanalyseur par exemple de type Metravib VA4000, selon la norme ASTM D 5992-96. La mesure des propriétés dynamiques est réalisée sur un échantillon de mélange élastomérique vulcanisé, c'est dire cuit jusqu'à un taux de conversion d'au moins 90%, l'échantillon ayant la forme d'une éprouvette cylindrique ayant une épaisseur égale à 2 mm et une section égale à 78,5 mm². On enregistre la réponse de l'échantillon de mélange élastomérique à une sollicitation sinusoïdale en cisaillement simple alterné, ayant une amplitude crête-crête égale à 0,7 MPa et une fréquence égale à 10 Hz. On effectue un balayage en température à vitesse de montée en température constante de +1.5°C/min. Les résultats exploités sont généralement le module complexe de cisaillement dynamique G*, comprenant une partie élastique G' et une partie visqueuse G'', et la perte dynamique tgδ, égale au rapport G''/G'. La température de transition vitreuse Tg est la température à laquelle la perte dynamique tgδ atteint un maximum lors du balayage en température. L'expression « mélange caoutchouteux » ou caoutchouc désigne une composition de caoutchouc comportant au moins un élastomère et une charge.

Le comportement mécanique d'un mélange élastomérique peut être caractérisé, en statique, par sa dureté Shore A, mesurée conformément aux normes DIN 53505 ou ASTM 2240, et, en dynamique, par son module complexe de cisaillement dynamique G*, tel que précédemment défini, à une température donnée, typiquement à 23°C.

Pour une dureté shore inférieure à 55 ou supérieure à 75, le galet d'entrainement ne peut pas transmettre le couple soit, en n'indentant pas suffisamment la surface de la bande de contact, soit en la déformant trop facilement sans permettre de cisaillement. Si le maximum de la perte dynamique tgδ est en dehors de la plage revendiquée, le mélange de la bande de contact est détruit soit par fissuration, soit par réversion due à un excès de température.

Les caractéristiques de l'invention sont illustrées par la figure de 1 schématique et non représentée à l'échelle.

L'invention comprend également un véhicule léger tel qu'un vélo, tricycle, fauteuil roulant comprenant un pneumatique tel que décrit précédemment dans lequel un galet métallique entraine au moins un tel pneumatique du véhicule par contact en rotation avec la bande de mélange caoutchouteux disposée sur le flanc dudit pneumatique, ce pneumatique étant spécialement conçu pour ces applications pour en améliorer la longévité et la précision de conduite par tous temps.

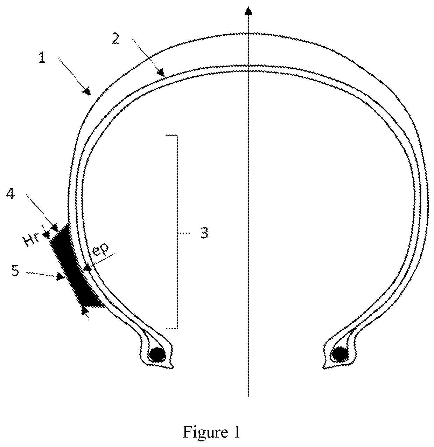

La figure 1 représente une coupe méridienne d'un pneumatique 1 de vélo, ayant une couche de carcasse 2, des flancs 3 et sur un des flancs 3 est disposé en saillie une bande 4 de mélange caoutchouteux présentant une surface lisse 5 apte à entrer en contact avec un galet d'entrainement muni d'indenteurs. La hauteur de la bande hr est comprise entre 10 et 30 mm et son épaisseur ep comprise entre 1 et 4 mm.

La mise au point de l'invention a nécessité des tests, pour déterminer le mélange caoutchouteux le plus apte à transmettre l'effort sans se détériorer dans le temps. Plusieurs tests sur machine ont été réalisés :
- Un test d'adhérence en condition humide : une roue de vélo dotée d'un dynamomètre est entrainée par un moteur doté du galet d'entrainement testé. Sur le flanc du pneumatique est collée une bande lisse du mélange de caoutchouteux testé. Le test est réalisé avec une pulvérisation d'eau. Les solutions ne permettant pas de passer un couple de 20 Nm sont éliminées.
- Un test d'usure de 5000 km sur ce même banc mais sans pulvérisation d'eau. Les solutions présentant de l'usure sont écartées.

Pour la bande de contact de mélange caoutchouteux collée sur le flanc du pneumatique, 25 mélanges caoutchouteux ont été testés. Leurs duretés Shore A étaient comprises entre 50 et 80, paramètre en lien avec leurs rigidités et leurs températures de transition vitreuse, paramètre en lien avec l'adhérence, étaient comprises entre -90°C et -10°C. Les 3 solutions satisfaisantes pour les deux tests ont toutes une dureté Shore A comprise entre 55 et 75, et dont la température de transition vitreuse où la perte dynamique tgδ est maximale, est comprise entre -15°C et -0°C.

L'expérience a montré par exemple que les mélanges caoutchouteux des bandes de roulement des pneumatiques de vélo, dont les températures de transition vitreuse sont extrêmement basses, comprises usuellement entre -50°C et -60°C ne permettent pas à l'invention de fonctionner. En effet ces mélanges sont conçus pour adhérer sous une pression élevée entre 8 et 15 bars sur de l'asphalte ou un sol nu et non pour être entrainés par un galet métallique muni d'indenteurs sollicitant le mélange à une fréquence décalée de l'usage pour lequel il est conçu. Ces mélanges étaient rapidement détruits par le galet.

Une solution avec un pneu tel que décrit dans l'invention associé à une bande de contact en mélange caoutchouteux ayant une dureté shore égale à 63 et une température de transition vitreuse égale à -5 °C, a passé les tests de sélection avec succès.

Un test de validation sur un vélo à assistance électrique en usage urbain sur 1500 km a permis de valider la solution retenue en condition réelle d'usage.

L'invention offre une solution au problème en préservant une très grande maniabilité en condition humide, les indenteurs venant rompre le film d'eau à la surface de contact avec le pneumatique. La souplesse de contact entre le galet et le pneumatique permet un positionnement extrêmement simple de l'un sur l'autre. Après 1500 km d'usage urbain, la bande de caoutchouc collée sur le flanc du pneumatique ne présente aucune trace d'usure.

L'invention permet donc bien d'apporter une solution simple à monter, assurant une excellente adhérence en condition humide et intéressante en usure donc pérenne dans le temps.

## Revendications

1. Pneumatique (1) destiné à équiper un vélo ou un fauteuil roulant à assistance électrique comprenant :
- une armature de sommet (2), radialement intérieure à une bande de roulement, ladite bande de roulement étant réunie par l'intermédiaire de deux flancs (3), à deux bourrelets, **caractérisé**
- **en ce que** le pneumatique (1) comprend sur au moins un des flancs (3) et en saillie du flanc, une bande (4) d'un mélange caoutchouteux d'épaisseur axiale (ep), perpendiculaire au flanc (3), au moins égale à 1 mm et au plus égale à 4 mm, et de hauteur radiale (Hr), perpendiculaire à l'axe de révolution du pneumatique (1), au moins égale à 10 mm et au plus égale à 30 mm,
- **en ce que** ledit mélange caoutchouteux de la bande (4) a une dureté Shore A comprise entre 55 et 75, et une température de transition vitreuse est comprise entre -15°C et -0°C,
- et **en ce que** ledit mélange caoutchouteux de la bande (4) forme une surface extérieure lisse (5) destinée à entrer en contact avec un galet d'entrainement porteur d'une pluralité d'indenteurs.

2. Véhicule léger tel qu'un vélo, tricycle, fauteuil roulant comprenant un pneumatique (1) selon la revendication 1 dans lequel un galet métallique entraine au moins un pneumatique (1) du véhicule par contact en rotation avec la bande (4) de mélange caoutchouteux disposée sur le flanc dudit pneumatique (1).

## Patentansprüche

1. Reifen (1), der zur Ausstattung eines Fahrrads oder eines Rollstuhls mit elektrischer Unterstützung bestimmt ist, umfassend:
- eine Gürtelverstärkung (2), radial innerhalb eines Laufstreifens, wobei der Laufstreifen über zwei Seitenwände (3) mit zwei Wülsten verbunden ist, **dadurch gekennzeichnet,**
- **dass** der Reifen (1) auf mindestens einer der Seitenwände (3) und von der Seitenwand vorspringend einen Streifen (4) aus einer Kautschukmischung mit einer axialen Dicke (ep), senkrecht zu der Seitenwand (3), von mindestens 1 mm und höchstens 4 mm und mit einer radialen Höhe (Hr), senkrecht zu der Drehachse des Reifens (1), von mindestens 10 mm und höchstens 30 mm umfasst,
- **dass** die Kautschukmischung des Streifens (4) eine Shore-A-Härte zwischen 55 und 75 und eine Glasübergangstemperatur zwischen -15 °C und -0 °C aufweist,
- und **dass** die Kautschukmischung des Streifens (4) eine glatte Außenfläche (5) bildet, die dazu bestimmt ist, mit einer Antriebsrolle in Kontakt zu gelangen, die eine Vielzahl von Eindringkörpern trägt.

2. Leichtes Fahrzeug wie ein Fahrrad, Dreirad, Rollstuhl mit einem Reifen (1) nach Anspruch 1, wobei eine Metallrolle mindestens einen Reifen (1) des Fahrzeugs durch rotatorischen Kontakt mit dem Streifen (4) aus Kautschukmischung antreibt, der auf der Seitenwand des Reifens (1) angeordnet ist.

## Claims

1. Tyre (1) that is intended to be fitted to an electrically assisted bicycle or wheelchair and comprises:
- a crown reinforcement (2), radially on the inside of a tread, said tread being connected by two sidewalls (3) to two beads, **characterized**
- **in that** the tyre (1) comprises, on at least one of the sidewalls (3) and protruding from the sidewall, a strip (4) of a rubber compound with an axial thickness (ep), perpendicular to the sidewall (3), that is at least equal to 1 mm and at most equal to 4 mm, and with a radial height (Hr), perpendicular to the axis of revolution of the tyre (1), that is at least equal to 10 mm and at most equal to 30 mm,
- **in that** said rubber compound of the strip (4) has a Shore A hardness of between 55 and 75, and a glass transition temperature of between -15°C and -0°C,
- and **in that** said rubber compound of the strip (4) forms a smooth outer surface (5) that is intended to come into contact with a drive roller bearing a plurality of indenting elements.

2. Lightweight vehicle, such as a bicycle, tricycle or wheelchair, comprising a tyre (1) according to Claim 1, wherein a metal roller drives at least one tyre (1) of the vehicle by rotational contact with the strip (4) of rubber compound arranged on the sidewall of said tyre (1).
